# EUROPÄISCHE PATENTSCHRIFT

(11) **EP 0 392 392 B1**
(45) Veröffentlichungstag und Bekanntmachung des Hinweises auf die Patenterteilung: **06.12.1995**
(21) Anmeldenummer: 90106660.5
(22) Anmeldetag: 06.04.1990
(51) Int. Cl.: C08K 9/12, C08K 5/00, C08L 23/02, C08J 3/22

(54) **Verfahren zum Stabilisieren von Polyolefinen**
Method for stabilizing polyolefins
Procédé pour stabiliser des polyoléfines

(30) Priorität: 10.04.1989 CH 1351/89
(43) Veröffentlichungstag der Anmeldung: 17.10.1990
(73) Patentinhaber: CIBA-GEIGY AG, 4002 Basel (CH)
(72) Erfinder: Pauquet, Jean-Roch, CH-4303 Kaiseraugst (CH); Todesco, Roberto, Dr., CH-4123 Allschwil (CH)
(74) Vertreter: Zumstein, Fritz, Dr.

(56) Entgegenhaltungen:
- EP-A- 0 278 579
- DE-A- 1 940 066

## Beschreibung

Die vorliegende Erfindung betrifft ein Verfahren zum Stabilisieren von auf Trägerkatalysatoren polymerisierten Olefinpolymeren mit einem mittleren Teilchendurchmesser von 1-5 mm.

JP-A-84/150 719 beschreibt ein Verfahren zum Stabilisieren von Polypropylenpulver, wobei das Polypropylenpulver, die Stabilisatoren und ein Trägermaterial in einem Mischer unter Erhitzen homogenisiert werden.

EP-A-281 189 beschreibt ein Verfahren zum Herstellen eines hydrolysebeständigen Stabilisatorgemisches aus einem Phosphit und einem phenolischen Antioxidans sowie die Verwendung dieses Stabilisatorgemisches zum Stabilisieren von Polypropylenpulver. Pulverförmiges Polyolefin muss vor der formgebenden Verarbeitung in einem Extruder granuliert werden. Bei dieser Granulierung werden dem Polymeren Stabilisatoren und sonstige Verarbeitungshilfen zugesetzt.

Im Handel können seit einiger Zeit unstabilisierte, granulatartige Polyolefine erhalten werden, die durch Polymerisation von Olefinen auf festen Trägerkatalysatoren hergestellt worden sind. Da diese Polyolefine bereits bei der Herstellung granulatartig anfallen, brauchen sie nicht mehr in einem nachträglichen Verarbeitungsschritt extrudiert werden; es sei denn, die Einarbeitung der Stabilisatoren und der Verarbeitungshilfen erfordert ein Aufschmelzen, um eine genügende Verteilung des Additivs im Polymeren zu gewährleisten.

Der Zusatz von Stabilisatoren während der Olefinpolymerisation verursacht in vielen Fällen Störungen der Polymerisation sowie einer Verfärbung der Polymerisate.

Die vorliegende Erfindung betrifft ein Verfahren zum Stabilisieren von auf Trägerkatalysatoren polymerisierten Olefinpolymeren, dadurch gekennzeichnet, dass diese Polyolefine einen mittleren Teilchendurchmesser von 1-5 mm haben und mit einem Stabilisatorgemisch behandelt werden, das hergestellt wird durch Erhitzen eines Gemisches, enthaltend
a) mindestens ein Trägermaterial und/oder eine Kombination aus
b) mindestens einen bei 20-120°C schmelzenden Stabilisator und
c) mindestens einen bei 120-260°C schmelzenden Stabilisator,
auf 120-260°C und anschliessendem Abkühlen bis zum Erstarren, wobei die Komponenten b) und c) verschieden sind.

Die Komponente b) kann gegebenenfalls die Funktion der Komponente a) als Trägermaterial übernehmen.

Das Gewichtsverhältnis a:c beträgt bevorzugt 0,1:1 bis 4:1, insbesondere 0,5:1 bis 2:1 und das Gewichtsverhältnis b:c ist z.B. 4:1 bis 0,1:1 oder 2:1 bis 0,1:1, bevorzugt 1:1 bis 0,1:1.

Bevorzugt ist ein Verfahren, worin das verwendete Stabilisatorgemisch die Komponenten a), b) und c) enthält.

Bei dem Trägermaterial handelt es sich bevorzugt um ein Wachs, Paraffinöl oder einen Glycerylmonocarbonsäureester. Als Beispiele für geeignete Tragermaterialien seien genannt: Polyethylen, Polypropylen (z.B. ataktisches), olefinische Copolymere (z.B. Copolymere von Propylen wie Propylen-Ethylen-Copolymer oder Propylen-Buten-1-Copolymer), Ethylen-Vinylacetat-Copolymere, Ethylen-(ungesättigter Carbonsäureester)-Copolymere (z.B. Ethylen-Methylmethacrylat-Copolymer), Ethylen-(ungesättigtes Carbonsäuremetallsalz)-Copolymere (z.B. Ethylen-Magnesiumacrylat-Copolymer oder Ethylen-zinkacrylat-Copolymer), mit ungesättigten Carbonsäuren, wie z.B. Maleinsäureanhydrid, modifiziertes Polyethylen oder modifiziertes Polypropylen, Petroleum, Paraffinöl, Polyalkylenglykol, wie z.B. Polyethylenglykol, Polypropylenglykol usw., oder Glycerylmonocarbonsäureester, bevorzugt Glycerylmonostearat.

Je nach seiner Beschaffenheit, schmilzt das Trägermaterial zum Beispiel bei 0-120°C, 10-120°C oder 20-100°C. Bevorzugt wird ein Trägermaterial eingesetzt, welches entweder bei 0-79°C (z.B. Paraffinöl) oder 80-105°C (z.B. Wachs) schmilzt.

Die Komponente b) ist bevorzugt ein sterisch gehindertes phenolisches Antioxidans, ein phosphorhaltiger Stabilisator, ein sterisch gehindertes Amin, ein Benztriazol, ein Benzophenon, ein Thiodicarbonsäurediester oder/und ein Dialkyldisulfid.

Die folgenden Stabilisatoren sind Beispiele für die Komponente b):

### Sterisch gehinderte phenolische Antioxidantien:

A) 2,2-Bis[3′,5′-di-tert-butyl-4′-hydroxyphenylpropionyloxyethoxyphenyl]propan 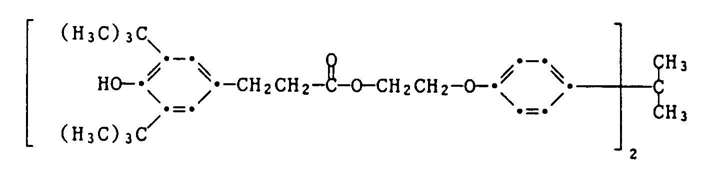 Schmelzpunkt: 100-102°C
B) Tetrakis[3,5-di-tert-butyl-4-hydroxyphenylpropionyloxymethyl]methan 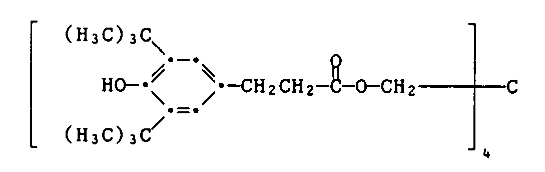 Schmelzpunkt: 110-120°C
C) n-Octadecyl-3-(3′,5′-di-tert-butyl-4′-hydroxyphenyl)propionat 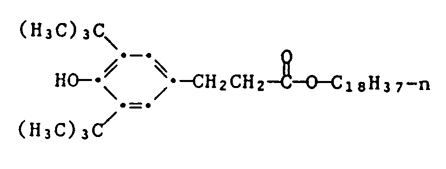 Schmelzpunkt: 50-55°C
D) Triethylenglykol-bis[3-(3′-tert-butyl-4′-hydroxy-5′-methylphenyl)propionat] 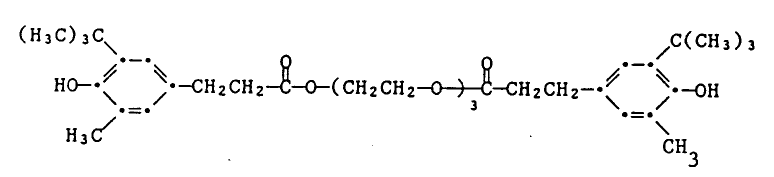 Schmelzpunkt: 67-79°C
E) 1,5-Bis[3′,5′-di-tert-butyl-4′-hydroxyphenylpropionyloxy]-3′-thiapentan 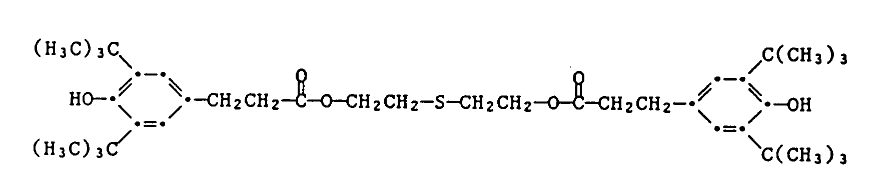 Schmelzpunkt: 63-68°C

### Phosphorhaltige Stabilisatoren:

F) Tetrakis[2,4-di-tert-butylphenyl]-diphenylendiphosphonit 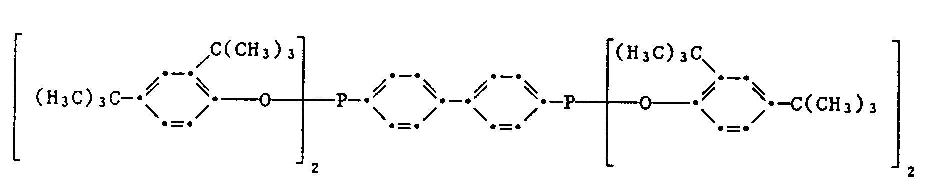 Schmelzpunkt: 75-95°C
G) Distearylpentaerythritdiphosphit 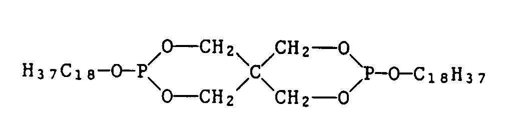 Schmelzpunkt: 40-60°C

### Sterisch gehinderte Amine:

H) Bis[2,2,6,6-tetramethyl-4-piperidinyl]sebacat 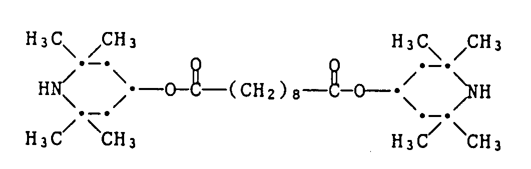 Schmelzpunkt: 82-86°C
I) Bis[1,2,2,6,6-pentamethyl-4-piperidinyl]sebacat 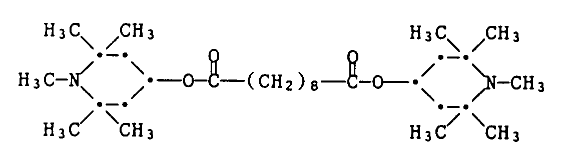 Schmelzpunkt: 20°C
J) Bis[2,2,6,6-tetramethyl-4-piperidinyl]succinat 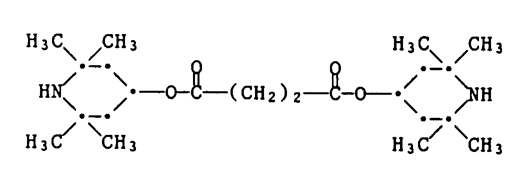 Schmelzpunkt: 120°C
K) Kondensationsprodukt von 1-(2′-Hydroxyethyl)-2,2,6,6-tetramethyl-4-piperidinol und Bernsteinsäure 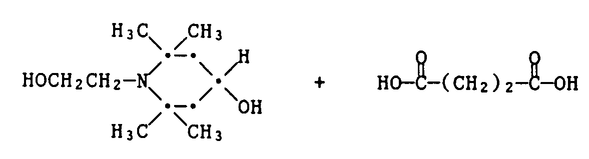 Schmelzpunkt: 55-70°C

### Benztriazole:

L) 2-(2′-Hydroxy-5′-tert-octyl)benztriazol ¹ 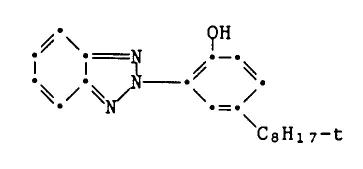 Schmelzpunkt: 103-104°C
M) 2-(2′-Hydroxy-3′,5′-di-tert-pentyl)benztriazol ² 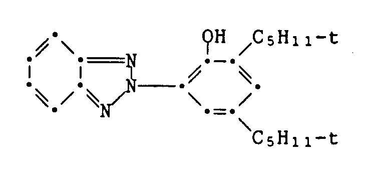 Schmelzpunkt: 79-87°C

¹ tert-octyl = 1,1,3,3-Tetramethyl-1-butyl
² tert-pentyl = 1,1-Dimethyl-1-propyl

### Benzophenon:

N) 2-Hydroxy-4-octyloxybenzophenon 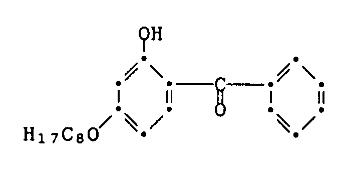 Schmelzpunkt: 47°C

### Thiodicarbonsäurediester:

O) Dilaurylthiodipropionat

   H₂₅C₁₂OOCCH₂CH₂-S-CH₂CH₂COOC₁₂H₂₅

   Schmelzpunkt: 40-45°C
P) Dimyristylthiodipropionat

   H₂₉C₁₄OOCCH₂CH₂-S-CH₂COOC₁₄H₂₉

   Schmelzpunkt: 44-48°C
Q) Distearylthiodipropionat

   H₃₇C₁₈OOCCH₂CH₂-S-CH₂CH₂COOC₁₈H₃₇

   Schmelzpunkt: 57-67°C

### Dialkyldisulfide:

R) Distearyldisulfid

   H₃₇C₁₈-SS-C₁₈H₃₇

   Schmelzpunkt: ∼66°C

Ein sterisch gehindertes phenolisches Antioxidans wird besonders bevorzugt als Komponente b) eingesetzt.

Die Komponente c) ist bevorzugt ein sterisch gehindertes phenolisches Antioxidans, ein Metalldesaktivator, ein sterisch gehindertes Amin, ein Benztriazol, ein phosphorhaltiger Stabilisator, ein nickelhaltiger UV-Absorber oder/und ein Metallsalz einer C₁₆-C₂₂-Fettsäure.

Die folgenden Stabilisatoren sind Beispiele für die Komponente c):

### Sterisch gehindertes phenolisches Antioxidans:

α) 1,3,5-Trimethyl-2,4,6-tris(3′,5′-di-tert-butyl-4′-hydroxybenzyl)benzol 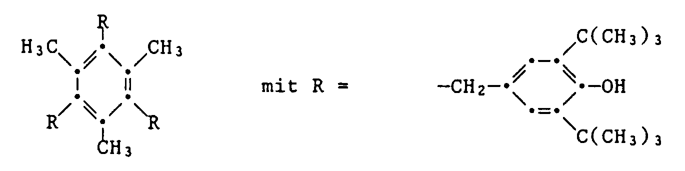 Schmelzpunkt: 242-245°C
β) 1,3,5-Tris(3′,5′-di-tert-butyl-4′-hydroxybenzyl)isocyanurat 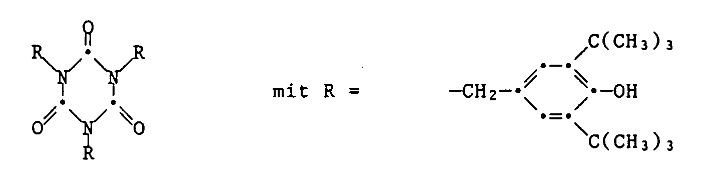 Schmelzpunkt: 218-223°C
γ) 1,3,5-Tris(2′,6′-dimethyl-4′-tert-butyl-5′-hydroxybenzyl)isocyanurat 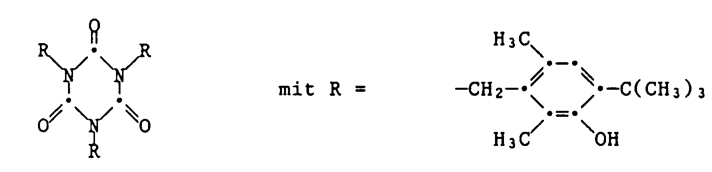 Schmelzpunkt: 145-155°C
δ) 1,2-Bis[3′,3′-bis(4˝-hydroxy-5˝-tert-butylphenyl)butanoyloxy]ethan 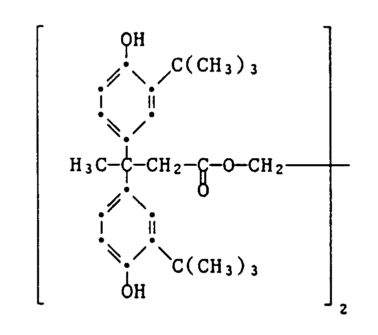 Schmelzpunkt: 170°C
ε) Bis(3-tert-butyl-4-hydroxy-6-methylphenyl)sulfid 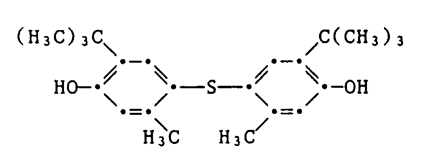 Schmelzpunkt: 161°C
ζ) 2-(2′-Hydroxy-3′-tert-butyl-5′-methylbenzyl)-4-methyl-6-tert-butylphenylacrylat 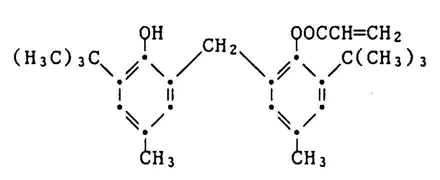 Schmelzpunkt: 130-132°C
η) 1,1,3-Tris[3′-tert-butyl-4′-hydroxy-6′-methylphenyl]butan 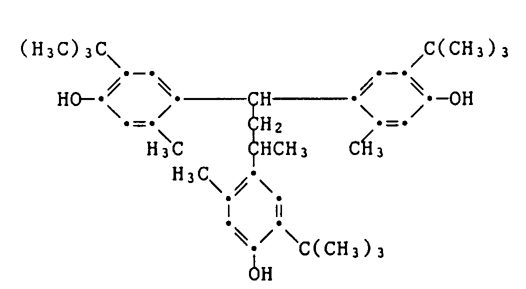 Schmelzpunkt: 182,5-190°C
ϑ) 2,4-Di-tert-butylphenyl-3′,5′-di-tert-butyl-4′-hydroxybenzoat 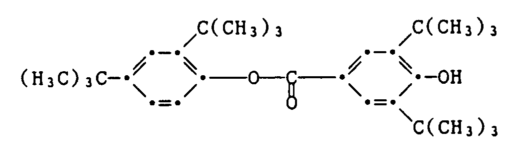 Schmelzpunkt: 190°C

### Metalldesaktivatoren:

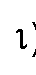 ) N,N-Bis[3,5-di-tert-butyl-4-hydroxyphenylpropionyl]hydrazin 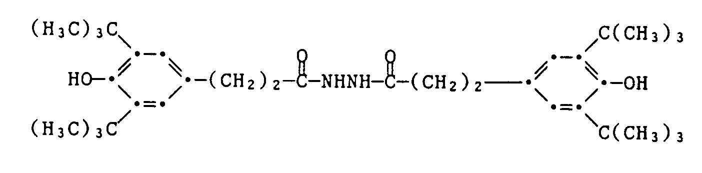 Schmelzpunkt: 224-229°C
κ) N,N-Bis[3,5-di-tert-butyl-4-hydroxyphenylpropionyloxyethyl]oxalsäurediamid 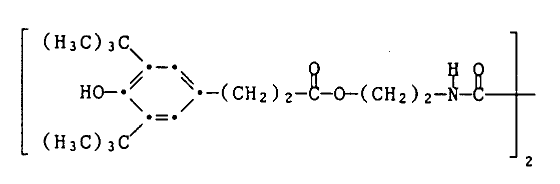 Schmelzpunkt: 173°C

### Sterisch gehinderte Amine:

λ) Poly[2-(N,N-bis(2',2',6',6'-tetramethyl-4'-piperidinyl)hexamethylendiamino-4-morpholino-1,3,5-triazin-6-yl] 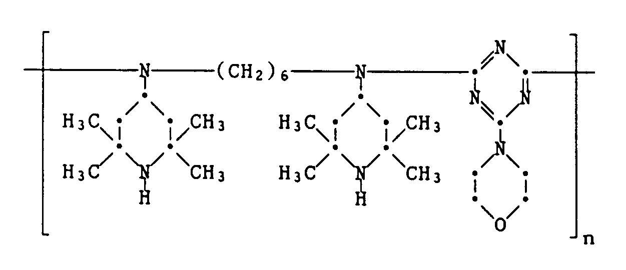 Schmelzpunkt:110-130°C
») Poly[2-(N,N-bis(2′,2′,6′,6'-tetramethyl-4′-piperidinyl)hexamethylendiamino-4-tert-octyl-1,3,5-triazin-6-yl] 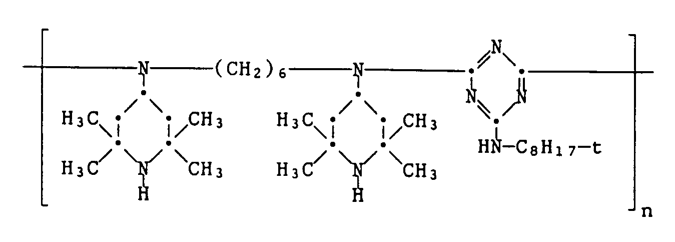 Schmelzpunkt: 120-150°C
ν) 1,5,8,12-Tetrakis[2′,4′-bis(1˝,2˝,2˝,6˝,6˝-pentamethyl-4˝-piperidinyl(butyl)amino)-1′,3′,5′-triazin-6′-yl]-1,5,8,12-tetraazadodecan 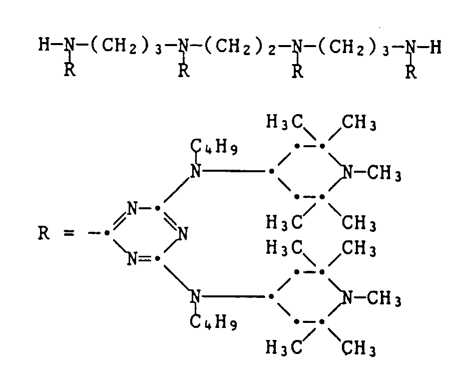 Schmelzpunkt: 150°C
ξ) Bis[1′,2′,2′,6′,6′-pentamethyl-4′-piperidinyl]-2-butyl-2-(3˝,5˝-di-tert-butyl-4˝-hydroxybenzyl)malonat 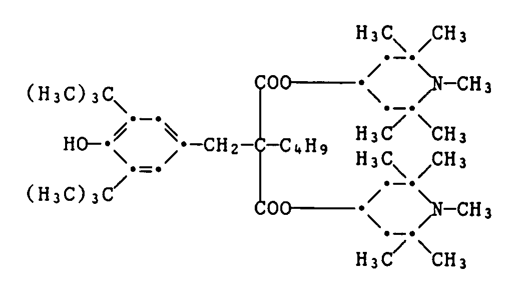 Schmelzpunkt: 146-150°C
ο) 1,2-Bis[3′,3′,5′,5′-tetramethyl-2′-oxo-1′,4′-diazinan-1′-yl]ethan 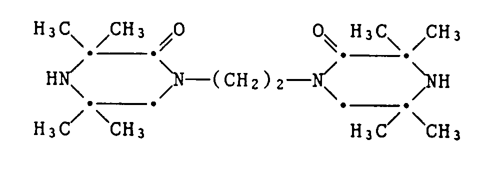 Schmelzpunkt: 136°C
π) 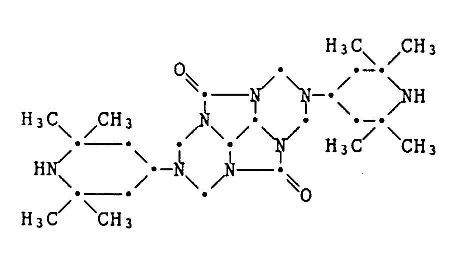 Schmelzpunkt: 270°C

### Benztriazole:

ρ) 2-(2′-Hydroxy-3,5-di-tert-butylphenyl)benztriazol 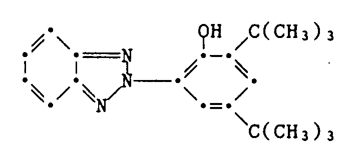 Schmelzpunkt: 150-155°C
σ) 2-(2′-Hydroxy-3′-tert-butyl-5′-methylphenyl)-5′-chlorobenztriazol 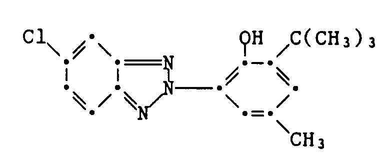 Schmelzpunkt: 137-140°C
τ) 2-(2'-Hydroxy-3',5'-di-tert-butylphenyl)-5'-chlorobenztriazol 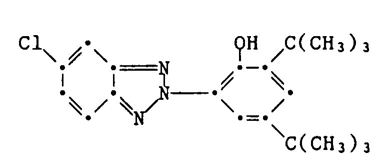 Schmelzpunkt: 154-158°C

### Phosphorhaltige Stabilisatoren:

ν) Tris[2,4-di-tert-butylphenyl]phosphit 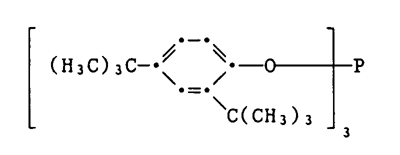 Schmelzpunkt: 180-185°C
φ) Bis[2,4-di-tert-butylphenyl]pentaerythritdiphosphit 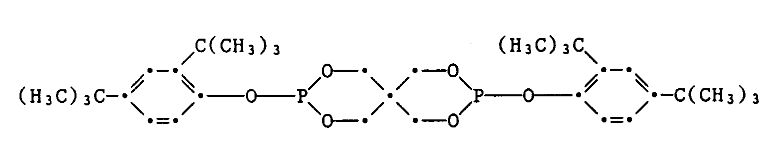 Schmelzpunkt: 160-175°C
χ) Bis[2,6-di-tert-butyl-4-methylphenyl]pentaerythritdiphosphit 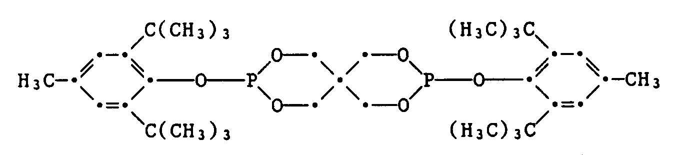 Schmelzpunkt: 235°C
ψ) 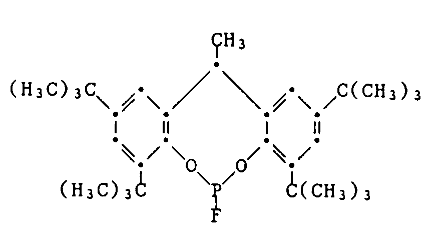 Schmelzpunkt: 200-201°C
ω) Kalziumsalz des 3,5-Di-tert-butyl-4-hydroxybenzylphosphonsäure-monoethylesters 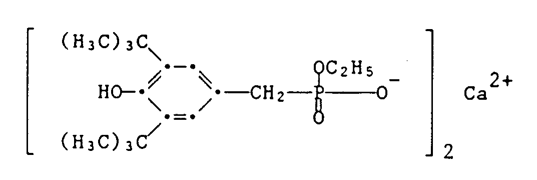 Schmelzpunkt: > 150°C
A) Nickelsalz des 3,5-Di-tert-butyl-4-hydroxybenzylphosphonsäure-monoethylesters 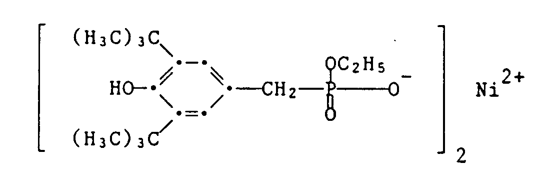 Schmelzpunkt: > 180°C

### Nickelhaltiger UV-Absorber:

B) 2,2′-Thio-bis[4-tert-octylphenolato]-butyl-amino-Nickel (II) 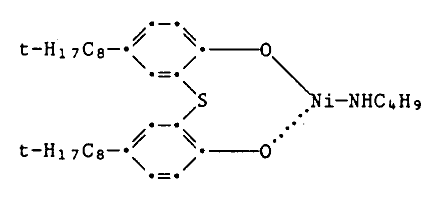 Schmelzpunkt: 258°C

### Metallsalze von C₁₆-C₂₂-Fettsäuren:

Γ) Ca-palmitat, Schmelzpunkt: 150-155°C (Zersetzung)
Δ) Mg-palmitat, Schmelzpunkt: 121°C
E) Zn-palmitat, Schmelzpunkt: ∼125°C
Z) Ca-stearat, Schmelzpunkt: 180°C
H) Mg-stearat, Schmelzpunkt: 145°C
ϑ) Zn-stearat, Schmelzpunkt: 130°C
I) Ca-behenat, Schmelzpunkt:∼150°C
K) Mg-behenat, Schmelzpunkt:∼150°C
Λ) Zn-behenat, Schmelzpunkt:∼125°C

Als Komponente c) ist ein phosphorhaltiger Stabilisator, insbesondere ein Phosphit, von Interesse.

Ein besonders bevorzugter Gegenstand der Erfindung ist ein Verfahren, worin das verwendete Stabilisatorsystem die Komponenten a), b) und c), enthält und die Komponente b) ein sterisch gehindertes phenolisches Antioxidans und die Komponente c) ein Phosphit ist.

Gemäss einer weiteren Bevorzugung ist die Komponente b) n-Octadecyl-3-(3′,5′-di-tert-butyl-4′-hydroxyphenyl)propionat oder/und Tetrakis[3,5-di-tert-butyl-4-hydroxyphenylpropionyloxymethyl]methan und die Komponente c) Tris[2,4-di-tert-butylphenyl]phosphit.

Ebenfalls bevorzugt ist ein Verfahren, worin die Komponente b) ein bei 50-120°C schmelzender Stabilisator und die Komponente c) ein bei 180-200°C schmelzender Stabilisator ist und das Stabilisatorgemisch auf 180-200°C erhitzt wird.

Die Komponenten a), b) und c) sind bekannte, grösstenteils im Handel erhältliche Produkte.

Olefine, welche auf Trägerkatalysatoren polymerisiert werden können, sind z.B. Ethylen oder α-Olefine, insbesondere Propylen, 1-Buten, 4-Methylpenten-1 oder 5-Methylhexen-1 sowie Gemische von Olefinen wie z.B. Ethylen-Propylen oder Propylen im Gemisch mit kleineren Mengen höherer α-Olefine.

Von Interesse sind auf Trägerkatalysatoren aufgebrachtes Polyethylen, Polypropylen, Copolymeres von Ethylen sowie Copolymeres von Propylen, insbesondere Polyethylen und Polypropylen.

Die verwendeten Polymerisationskatalysatoren, welche häufig als Katalysatoren der dritten Generation bezeichnet werden, sind zweckmässig feste Katalysatoren einer bestimmten Teilchengrösse wie z.B. in der DE-A-29 33 997 und DE-A-26 41 960 beschrieben. Sie bestehen z.B. aus einem wasserfreien Magnesiumdihalogenid in aktiver Form und einer Titanverbindung. Unter Magnesiumdihalogenid in aktiver Form ist ein solches zu verstehen, in dessen Röntgenspektrum die Linie der stärksten Reflexion verbreitert ist gegenüber der entsprechenden Linie im Spektrum des inaktiven Magnesiumhalogenids.

Vorzugsweise wird als Magnesiumdihalogenid Magnesiumdichlorid oder Magnesiumdibromid verwendet. Die Titanverbindung enthält vorzugsweise mindestens eine Titan-Halogen-Bindung, besonders bevorzugt verwendet man Titantetrachlorid.

Die Titanverbindung kann in Kombination mit einem Elektronendonator verwendet werden, beispielsweise einem Carbonsäureester, wie dies in der EP-A-45 977 beschrieben ist.

Nach der Umsetzung der Magnesiumhalogenid-Komponente mit der Titanverbindung und gegebenenfalls mit dem Elektronendonator werden die überschüssige Titanverbindung und der überschüssige Elektronendonator zweckmässig mit einem inerten Lösungsmittel ausgewaschen, beispielsweise mit Hexan oder Heptan.

Der so bereitete Katalysator wird aktiviert durch Umsetzung mit einem Aluminiumalkyl, das vorzugsweise als Lösung in einem Alkan verwendet wird. Beispiele für geeignete Aluminiumalkyle sind Al(C₂H₅)₃ oder Al(C₄H₉)₃. Hierbei kann man als Coaktivator einen Elektronendonator zusetzen wie z.B. eine organische Siliziumverbindung, die mindestens eine Si-O-C-Bindung enthält, wie dies z.B. in der EP-A-45 977 beschrieben ist. Beispiele für solche Siliziumverbindungen sind Phenyltriethoxysilan, Phenyltrimethoxysilan, Diphenyldimethoxysilan, Methyltriethoxysilan, Dimethyldiethoxysilan oder Ethyltrimethoxysilan.

Die Polymerisation mit diesen Katalysatoren kann nach bekannten Methoden in flüssiger oder gasförmiger Phase durchgeführt werden. Die flüssige Phase kann z.B. ein aliphatischer Kohlenwasserstoff sein oder das flüssige Monomer selbst.

Kugelförmig polymerisierte Polyolefine werden z.B. auch in P. Galli, P.C. Barbé und L. Noristi; "High Yield Catalysts in Olefin Polymerization", Die Angewandte Makromolekulare Chemie 120 (1984), S. 73-90 (Nr. 1935) beschrieben.

Der Durchmesser der auf Trägerkatalysatoren polymerisierten Olefinpolymeren beträgt bevorzugt 2-5mm, insbesondere 2-3mm.

Der Schmelzpunkt dieser granulatartigen Polyolefine beträgt z.B. 140-165°C.

Die Stabilisatorgemische liegen bevorzugt in einer Konzentration von 0,01 bis 5 Gew.%, insbesondere 0,05 bis 1 Gew.%, in dem zu stabilisierenden Polyolefin vor.

Es ist vorteilhaft, das Stabilisatorsystem vor der Einarbeitung in das Polyolefin zu erwärmen bis eine milchige Lösung vorliegt. Diese milchige Lösung ist eine Suspension der Komponente c) in a) oder/und b). Zur Stabilisierung wird das Polyolefin mit dem Stabilisatorsystem, welches eine Temperatur von z.B. 60-120°C, bevorzugt 100-120°C, insbesondere 100-110°C, besitzt, in einer geeigneten Vorrichtung (bevorzugt einem Mischer) z.B. 2-10 min gerührt und anschliessend abgekühlt. Zweckmässigerweise wird das Polyolefin vor der Stabilisierung auf z.B. ∼60-120°C erhitzt.

Die Temperatur des Polyolefins kann z.B. 60-79°C betragen, wenn das Stabilisatorsystem als Trägermaterial eine bei ∼0-79°C schmelzende Substanz, wie z.B. Paraffinöl, enthält oder nachträglich mit Paraffinöl behandelt worden ist. Das Gewichtsverhältnis Stabilisatorsystem zu Paraffinöl beträgt in letzterem Fall z.B. 1:1 bis 3:1. Bei der nachträglichen Behandlung des Stabilisatorsystems mit Paraffinöl wird das Stabilisatorsystem zweckmässigerweise in heisses Paraffinöl (100-120°C) eingerührt und anschliessend solange gerührt (z.B. 15-30 min) bis ein homogenes Gemisch entsteht, welches für die Stabilisierung des Polyolefins benutzt werden kann.

Wird als Trägermaterial eine bei ∼80-110°C schmelzende Substanz, wie z.B. Wachs, verwendet, ist es vorteilhaft, wenn die Temperatur des Polyolefins z.B. 80-120°C, bevorzugt 80-110°C, beträgt.

Die Herstellung des Stabilisatorsystems erfolgt zweckmässig durch Mischen der Komponenten a) oder/und b) und c). Das Gemisch wird, bevorzugt unter Rühren, auf z.B. 120-260°C erhitzt. Die erhaltene Schmelze wird z.B. 2-15 min, bevorzugt 8-12 min, gerührt und anschliessend bis zum Erstarren, was z.B. bei einer Temperatur von 0-30°C eintritt, abgekühlt. Die Kühlung kann z.B. mit kaltem Wasser oder einer anderen inerten Flüssigkeit, mit Stickstoff oder einem anderen inerten Gas durchgeführt werden. Es ist auch möglich, die Schmelze z.B. mit einer kalten Metallplatte abzukühlen.

Die Herstellung des Stabilisatorsystems kann z.B. auch in einem Kneter erfolgen. Das Stabilisatorgemisch fällt dann als Granulat an.

Die folgenden Beispiele erläutern die Erfindung weiter.

### Beispiel 1: Herstellung der Stabilisatorgemische.

### Stabilisatorgemisch I:

20 g n-Octadecyl-3-(3′,5′-di-tert-butyl-4′-hydroxyphenyl)propionat, 50 g Tetrakis[3,5-di-tert-butyl-4-hydroxyphenylpropionyloxymethyl]methan und 100 g Tris[2,4-di-tert-butylphenyl]phosphit sowie 200 g Polyethylen-Wachs (Schmelzpunkt gemäss ASTM D-3104: 102°C, Härte gemäss ASTM D-5: 7,0 dmm, Dichte gemäss ASTM D-1505: 0,91 g/cc, Viskosität nach Brookfield bei 140°C: 180 cps) werden gemischt und auf 200°C erhitzt. Das geschmolzene Material wird 10 min bei dieser Temperatur gerührt. Anschliessend wird das Gemisch ebenfalls unter Rühren abgekühlt, wobei es erstarrt.

### Stabilisatorgemisch II:

II wird in Analogie zu I hergestellt, wobei an Stelle des Wachses Glycerylmonostearat verwendet wird.

### Stabilisatorgemisch III:

III wird in Analogie zu I hergestellt, wobei an Stelle des Polyethylen-Wachses Distearylthiodipropionat verwendet wird.

### Stabilisatorgemisch IV:

IV wird in Analogie zu I hergestellt, wobei an Stelle von 200 g Polyethylen-Wachs, 50 g Polyethylen-Wachs verwendet wird.

### Stabilisatorgemisch V:

V wird in Analogie zu IV hergestellt, wobei das Mischen und Erhitzen in einem Extruder (®BUSS-KO-KNETER) geschieht und das Additivgemisch als Granulat hergestellt wird.

### Beispiele 2a-2c:Stabilisierung von sphärischen Polypropylenkügelchen.

a) 1000 g sphärisches Polypropylen (® Moplen SPL 12) werden in einem Henschel Mischer (Kapazität: 5000 ml) während 7 min auf 104°C erhitzt. Es werden 3,7 g der in Tabelle 1a angegebenen Stabilisatormischung, welche zuvor bei 104°C geschmolzen wurde, hinzugefügt. Das Gemisch wird 2 min gerührt und anschliessend abgekühlt. Die stabilisierten Polypropylenkügelchen werden 30 h einer Ofenalterung bei 149°C ausgesetzt. Die Versuchsergebnisse sind in Tabelle 1a angegeben. Eine Verfärbung der Polypropylenkügelchen bedeutet eine nicht ausreichende Stabilisierung.

**Tabelle 1a**

| Stabilisatorgemisch | 30 h Ofenalterung bei 149°C |
|---|---|
| ― | Verfärbung |
| I | Keine Verfärbung |
| II | Keine Verfärbung |
| III | Keine Verfärbung |

b) 1000 g sphärisches Polypropylen (®Moplen SPL 12) werden in einem Henschel Mischer (Kapazität: 5000 ml) während 3 min auf 65°C erhitzt. Es werden 3,7 g der in Tabelle 1b angegebenen Stabilisatormischung, welche zuvor aus 104°C erhitzt wurde, hinzugefügt. Die Weiterverarbeitung und Prüfung erfolgt wie unter a). Die Versuchsergebnisse sind in Tabelle 1b aufgeführt.

**Tabelle 1b**

| Stabilisatorgemisch | 30 h Ofenalterung bei 149°C |
|---|---|
| ― | Verfärbung |
| III | Keine Verfärbung |

c) 1000 g sphärisches Polypropylen (®Moplen SPL 12) werden in einem Henschel Mischer (Kapazität: 5000 ml) während 3 min auf 65°C erhitzt.

2,2 g der in Tabelle 1c angegebenen Stabilisatormischung werden in 1g heisses Paraffinöl (110°C) gegeben und die erhaltene Mischung wird 20 min bei dieser Temperatur gerührt. Anschliessend wird diese Mischung zu dem Polypropylen (65°C) gegeben, dass Gemisch 2 min gerührt und dann abgekühlt. Die Prüfung der Polypropylenkügelchen erfolgt wie unter a). Die Versuchsergebnisse sind in der Tabelle 1c angegeben.

**Tabelle 1c**

| Stabilisatorgemisch | 30 h Ofenalterung bei 149°C |
|---|---|
| ― | Verfärbung |
| IV | Keine Verfärbung |
| V | Keine Verfärbung |

## Patentansprüche

1. Verfahren zum Stabilisieren von auf Trägerkatalysatoren polymerisierten Olefinpolymeren, dadurch gekennzeichnet, dass diese Polyolefine einen mittleren Teilchendurchmesser von 1-5 mm haben und mit einem Stabilisatorgemisch behandelt werden, das hergestellt wird durch Erhitzen eines Gemisches, enthaltend
a) mindestens ein Trägermaterial und/oder eine Kombination aus
b) mindestens einen bei 20-120°C schmelzenden Stabilisator und
c) mindestens einen bei 120-260°C schmelzenden Stabilisator,
auf 120-260°C und anschliessendem Abkühlen bis zum Erstarren, wobei die Komponenten b) und c) verschieden sind.

2. Verfahren gemäss Anspruch 1, worin das Stabilisatorgemisch die Komponenten a), b) und c) enthält.

3. Verfahren gemäss Anspruch 1, worin die Komponente a) ein Wachs, Paraffinöl oder ein Glycerylmonocarbonsäureester ist.

4. Verfahren gemäss Anspruch 3, worin die Komponente a) ein Polyethylen, ein Polypropylen, ein olefinisches Copolymer, ein Ethylen-Vinylacetat-Copolymer, ein Ethylen-(ungesättigter Carbonsäureester)-Copolymer, ein Ethylen-(ungesättigtes Carbonsäuremetallsalz)-Copolymer, ein mit ungesättigten Carbonsäuren modifiziertes Polyethylen oder modifiziertes Polypropylen, Petroleum, Paraffinöl, ein Polyalkylenglykol oder ein Glycerylmonocarbonsäureester ist.

5. Verfahren gemäss Anspruch 1, worin die Komponente b) ein sterisch gehindertes phenolisches Antioxidans, ein phosphorhaltiger Stabilisator, ein sterisch gehindertes Amin, ein Benztriazol, ein Benzophenon, ein Thiodicarbonsäurediester oder/und ein Dialkyldisulfid ist.

6. Verfahren gemäss Anspruch 1, worin die Komponente b) ein sterisch gehindertes phenolisches Antioxidans ist.

7. Verfahren gemäss Anspruch 1, worin die Komponente c) ein sterisch gehindertes phenolisches Antioxidans, ein Metalldesaktivator, ein sterisch gehindertes Amin, ein Benztriazol, ein phosphorhaltiger Stabilisator, ein nickelhaltiger UV-Absorber oder/und ein Metallsalz einer C₁₆-C₂₂-Fettsäure ist.

8. Verfahren gemäss Anspruch 1, worin die Komponente c) ein phosphorhaltiger Stabilisator ist.

9. Verfahren gemäss Anspruch 1, worin die Komponente c) ein Phosphit ist.

10. Verfahren gemäss Anspruch 2, worin die Komponente b) ein sterisch gehindertes phenolisches Antioxidans und die Komponente c) ein Phosphit ist.

11. Verfahren gemäss Anspruch 10, worin die Komponente b) n-Octadecyl-3-(3′,5′-di-tert-butyl-4′-hydroxyphenyl)propionat oder/und Tetrakis[3,5-di-tert-butyl-4-hydroxyphenylpropionyloxymethyl]methan ist und die Komponente c) Tris[2,4-di-tert-butylphenyl]phosphit ist.

12. Verfahren gemäss Anspruch 1, worin die Komponente b) ein bei 50-120°C schmelzender Stabilisator und die Komponente c) ein bei 180-200°C schmelzender Stabilisator ist und das Stabilisatorgemisch auf 180-200°C erhitzt wird.

13. Verfahren gemäss Anspruch 1, worin die Polyolefine einen mittleren Durchmesser von 2-5 mm haben.

14. Das nach dem Verfahren gemäss Anspruch 1 stabilisierte Polyolefin.

## Claims

1. A process for stabilising olefin polymers that have been polymerised on carrier catalysts, wherein those polyolefins have a mean particle diameter of from 1 to 5 mm and are treated with a stabiliser mixture prepared by heating to from 120 to 260°C a mixture comprising
a) at least one carrier and/or a combination of
b) at least one stabiliser that melts at from 20 to 120°C and
c) at least one stabiliser that melts at from 120 to 260°C,
and then cooling the mixture until solidified, components b) and c) being different.

2. A process according to claim 1, wherein the stabiliser mixture comprises components a), b) and c).

3. A process according to claim 1, wherein component a) is a wax, paraffin oil or a glyceryl monocarboxylic acid ester.

4. A process according to claim 3, wherein component a) is a polyethylene, a polypropylene, an olefinic copolymer, an ethylene/vinyl acetate copolymer, an ethylene/(unsaturated carboxylic acid ester) copolymer, an ethylene/(unsaturated carboxylic acid metal salt) copolymer, a polyethylene or polypropylene each modified with unsaturated carboxylic acids, petroleum, paraffin oil, a polyalkylene glycol or a glyceryl monocarboxylic acid ester.

5. A process according to claim 1, wherein component b) is a sterically hindered phenolic antioxidant, a phosphorus-containing stabiliser, a sterically hindered amine, a benzotriazole, a benzophenone, a thiodicarboxylic acid diester and/or a dialkyl disulfide.

6. A process according to claim 1, wherein component b) is a sterically hindered phenolic antioxidant.

7. A process according to claim 1, wherein component c) is a sterically hindered phenolic antioxidant, a metal deactivator, a sterically hindered amine, a benzotriazole, a phosphorus-containing stabiliser, a nickel-containing UV-absorber and/or a metal salt of a C₁₆-C₂₂-fatty acid.

8. A process according to claim 1, wherein component c) is a phosphorus-containing stabiliser.

9. A process according to claim 1, wherein component c) is a phosphite.

10. A process according to claim 2, wherein component b) is a sterically hindered phenolic antioxidant and component c) is a phosphite.

11. A process according to claim 10, wherein component b) is n-octadecyl-3-(3',5'-di-tert-butyl-4'-hydroxyphenyl)-propionate and/or tetrakis[3,5-di-tert-butyl-4-hydroxyphenylpropionyloxymethyl]methane, and component c) is tris[2,4-di-tert-butylphenyl]phosphite.

12. A process according to claim 1, wherein component b) is a stabiliser that melts at from 50 to 120°C and component c) is a stabiliser that melts at from 180 to 200°C and the stabiliser mixture is heated to from 180 to 200°C.

13. A process according to claim 1, wherein the polyolefins have a mean diameter of from 2 to 5 mm.

14. The polyolefin stabilised in accordance with the process of claim 1.

## Revendications

1. Procédé de stabilisation de polymères d'oléfines polymérisées sur catalyseur supporté, caractérisé en ce que ces polyoléfines ont un diamètre de particules moyen compris entre 1 et 5 mm et sont traitées avec un mélange de stabilisants, qui est préparé en chauffant un mélange contenant
a) au moins un matériau support et/ou une combinaison de
b) au moins un stabilisant fondant entre 20 et 120°C et
c) au moins un stabilisant fondant entre 120 et 260°C,
à une température comprise entre 120 et 260°C et après quoi on refroidit jusqu'à prise en masse, les composants b) et c) étant différents.

2. Procédé selon la revendication 1, dans lequel le mélange de stabilisants contient les composants a), b) et c).

3. Procédé selon la revendication 1, dans lequel le composant a) est une cire, une huile de paraffine ou un ester glycérylique d'acide monocarboxylique.

4. Procédé selon la revendication 3, dans lequel le composant a) est un polyéthylène, un polypropylène, un copolymère oléfinique, un copolymère éthylène-acétate de vinyle, un copolymère éthylène-(ester d'acide carboxylique insaturé), un copolymère éthylène-(sel métallique d'acide carboxylique insaturé), un polyéthylène modifié par des acides carboxyliques insaturés ou du polypropylène modifié, de l'éther de pétrole, de l'huile de paraffine, un polyalkylèneglycol ou un ester glycérylique d'acide monocarboxylique.

5. Procédé selon la revendication 1, dans lequel le composant b) est un anti-oxydant phénolique stériquement encombré, un stabilisant contenant du phosphore, une amine stériquement encombrée, un benzotriazole, une benzophénone, un diester d'acide thiodicarboxylique ou/et un dialkyldisulfure.

6. Procédé selon la revendication 1, dans lequel le composant b) est un anti-oxydant phénolique stériquement encombré.

7. Procédé selon la revendication 1, dans lequel le composant c) est un anti-oxydant phénolique stériquement encombré, un désactivateur métallique, une amine stériquement encombrée, un benzotriazole, un stabilisant contenant du phosphore, un absorbant UV contenant du nickel ou/et un sel métallique d'un acide gras en C₁₆-C₂₂.

8. Procédé selon la revendication 1, dans lequel le composant c) est un stabilisant contenant du phosphore.

9. Procédé selon la revendication 1, dans lequel le composant c) est un phosphite.

10. Procédé selon la revendication 2, dans lequel le composant b) est un anti-oxydant phénolique stériquement encombré et le composant c) est un phosphite.

11. Procédé selon la revendication 10, dans lequel le composant b) est le propionate de n-octadécyl-3-(3',5'-di-tert-butyl-4'-hydroxyphényle) ou/et le tétrakis-[3,5-di-tert-butyl-4-hydroxyphénylpropionyloxyméthyl]-méthane et le composant c) est le tris-[2,4-di-tert-butylphényl]-phosphite.

12. Procédé selon la revendication 1, dans lequel le composant b) est un stabilisant fondant à une température comprise entre 50 et 120°C et le composant c) est un stabilisant fondant à une température comprise entre 180 et 200°C et on fond le mélange de stabilisants à une température comprise entre 180 et 200°C.

13. Procédé selon la revendication 1, dans lequel les polyoléfines ont un diamètre moyen compris entre 2 et 5 mm.

14. Polyoléfine stabilisée selon le procédé conforme à la revendication 1.
